# EUROPEAN PATENT APPLICATION

(11) **EP 4 407 602 A1**
(43) Date of publication of application: **31.07.2024**
(21) Application number: 21958364.8
(22) Date of filing: 22.09.2021
(51) Int. Cl.: G10L 13/00

(54) **SITUATION AWARENESS SYSTEM, VOICE RESPONSE DEVICE, AND SITUATION AWARENESS METHOD**

(71) Applicant: Fuji Corporation, Chiryu-shi, Aichi 472-8686 (JP)
(72) Inventor: KITO, Shuichiro, Chiryu-shi, Aichi 472-8686 (JP)
(74) Representative: Grünecker Patent- und Rechtsanwälte PartG mbB
(86) International application number: PCT/JP2021/034794
(87) International publication number: WO 2023/047487

(57) **Abstract**

A situation awareness system that is configured to grasp a situation of a target person in a residence, includes one or more detection sensors configured to perform at least any one of detecting the target person, detecting a state of an installation object which is installed in the residence and of which the state is changeable due to an operation of the target person, and detecting a state of an environment in the residence, a voice response device configured to perform a voice response including an utterance to the target person, and a storage section configured to store information. The voice response device is configured to perform an utterance to the target person with a content in accordance with a result of the detection by the detection sensor, and store information including a conversation content with the target person accompanying the utterance in the storage section.

## Description

### Technical Field

The present description discloses a situation awareness system, a voice response device, and a situation awareness method.

### Background Art

Conventionally, there has been proposed a system which is configured to generate an appropriate response to an input voice and output the response by voice, and grasps a situation of a target person who is watched over or monitored. For example, the system of Patent Literature 1 includes a microphone, a camera, and various sensors, receives the voice input from the microphone, and starts imaging by the camera. Then, when voice of the target person is input via the microphone, voice data is recorded, and the response generated by analyzing the voice data is output by the voice, or image data is subjected to image processing to specify an object in a captured image.

### Patent Literature

Patent Literature 1: JP-A-2018-136541

### Summary of the Invention

### Technical Problem

Since the system of Patent Literature 1 is provided with the camera, the target person may feel resistance to a state where the image is captured by the camera or may feel a burden of being always watched.

A main object of the present disclosure is to grasp a situation of a target person without monitoring the target person with a camera or the like.

### Solution to Problem

The present disclosure employs the following means to achieve the main object described above.

The present disclosure relates to a situation awareness system for grasping a situation of a target person in a residence, the situation awareness system including: one or more detection sensors configured to perform at least any one of detecting the target person, detecting a state of an installation object which is installed in the residence and of which the state is changeable due to an operation of the target person, and detecting a state of an environment in the residence; a voice response device configured to perform a voice response including an utterance to the target person; and a storage section configured to store information, in which the voice response device is configured to perform an utterance to the target person with a content in accordance with a result of the detection by the detection sensor, and store information including a conversation content with the target person accompanying the utterance in the storage section.

In the situation awareness system of the present disclosure, since the voice response device performs the utterance to the target person with the content in accordance with the result of the detection by the detection sensor and stores the information including the conversation content with the target person accompanying the utterance in the storage section, it is possible to grasp the situation of the target person without monitoring the target person with the camera or the like.

### Brief Description of Drawings

Fig. 1 is a configuration diagram illustrating an outline of a configuration of residence 1 including situation awareness system 10.
Fig. 2 is a block diagram illustrating an outline of a configuration of situation awareness system 10.
Fig. 3 is a flowchart illustrating an example of situation awareness processing.
Fig. 4 is an explanatory diagram illustrating an example of a situation, a conversation content, and corresponding processing.
Fig. 5 is an explanatory diagram illustrating an example of a situation, a conversation content, and corresponding processing.
Fig. 6 is an explanatory diagram illustrating an example of an operation intervention content, a conversation content, and corresponding processing.

### Description of Embodiments

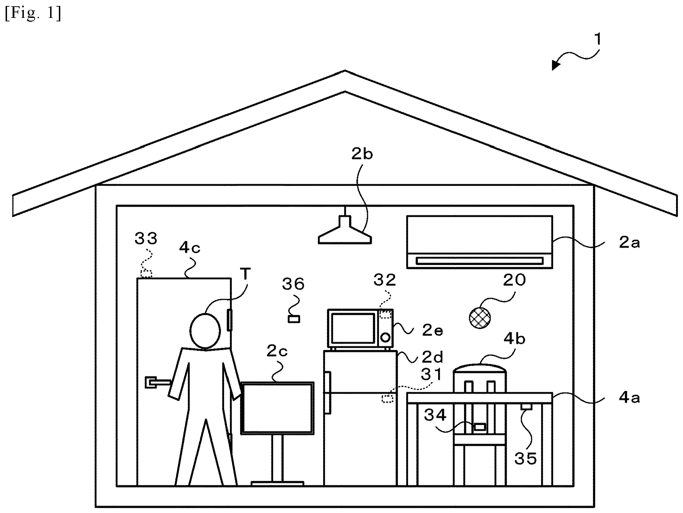

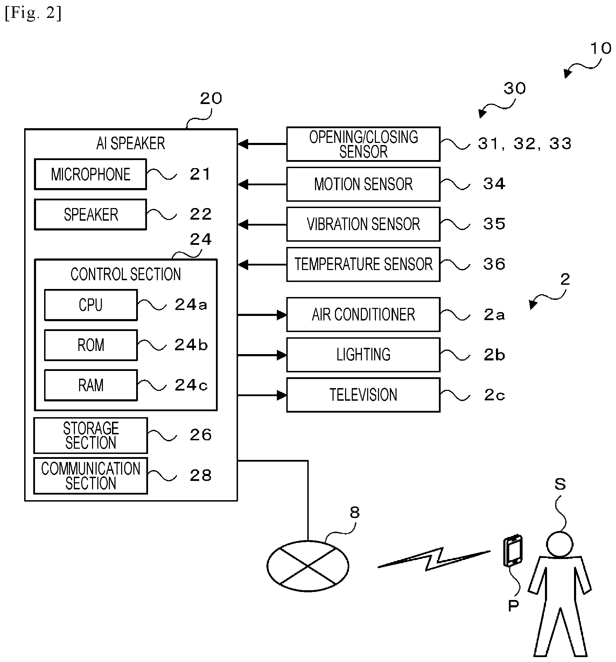

Next, an embodiment of the present disclosure will be described with reference to the drawings. Fig. 1 is a configuration diagram illustrating an outline of a configuration of residence 1 including situation awareness system 10. Fig. 2 is a block diagram illustrating an outline of a configuration of situation awareness system 10.

Residence 1 is a building in which target person T who is watched over or monitored lives. Residence 1 includes multiple types of household electrical appliances (electrical products) 2, multiple types of furniture/fixture 4, and situation awareness system 10. In Fig. 1, a dwelling residence is illustrated as residence 1, but each dwelling unit of an apartment residence such as a mansion or an apartment may be used. In addition, target person T is, for example, an elderly person who lives alone, but is not limited to an elderly person as long as the situation is grasped (monitored) by administrator S (see Fig. 2), and may be a student or the like.

Examples of household electrical appliance 2 include air conditioner 2a, lighting 2b, television 2c, refrigerator 2d, and microwave oven 2e, and air conditioner 2a, lighting 2b, or television 2c can be operated by a remote controller. Examples of furniture/fixture 4 include table 4a, chair 4b, and interior door 4c.

Situation awareness system 10 is a system for grasping the situation of target person T, and includes AI speaker 20 capable of performing an automatic voice response including an utterance to target person T, and various sensors 30 that perform detection of the target person, detection of an operation of the target person, detection of a state of an environment in residence 1, and the like.

AI speaker 20 includes microphone 21 that collects the voice, speaker 22 that outputs voice, control section 24 that controls an operation of AI speaker 20, storage section 26 that stores various information, and communication section 28 that communicates with an outside, and is mounted on a wall in residence 1. AI speaker 20 is not limited to being wall-mounted, and may be stationary.

control section 24 is configured as a microprocessor including CPU 24a as a main component, and includes ROM 24b that stores various control programs, RAM 24c that is used as a work area, an input/output port (not illustrated), and the like. A voice signal from microphone 21, detection signals of various sensors 30, and the like are input to control section 24. In addition, control section 24 outputs the voice signal to speaker 22, various information or various instructions to be transmitted from communication section 28, and the like. Storage section 26 is configured with, for example, HDD or the like, and stores various information related to the grasped situation as described later. Communication section 28 can transmit an operation signal to air conditioner 2a, lighting 2b, television 2c, or the like by near field communication such as ZigBee (registered trademark), Bluetooth (registered trademark), or wireless LAN based on the instruction from control section 24. Communication section 28 can transmit various information from control section 24 to portable terminal P of administrator S or the like via network 8 such as the Internet.

Examples of various sensors 30 include magnetic detection type opening/closing sensors 31, 32, and 33, infrared radiation type motion sensor 34, piezoelectric type vibration sensor 35, and infrared radiation type temperature sensor 36. Opening/closing sensor 31 is provided in refrigerator 2d and detects opening and closing of a door of refrigerator 2d. Opening/closing sensor 32 is provided in microwave oven 2e and detects opening and closing of a door of microwave oven 2e. Opening/closing sensor 33 is provided on a door frame of interior door 4c and detects opening and closing of interior door 4c. Motion sensor 34 is provided on chair 4b and detects that target person T sits on chair 4b. Vibration sensor 35 is provided on table 4a and detects vibration when a dish or the like is placed on table 4a, vibration when target person T takes a meal, or the like. Temperature sensor 36 is provided in a room and detects a temperature in the room. Various sensors 30 may further include a humidity sensor for detecting humidity in the room, a temperature sensor for detecting a temperature outside the room, and the like. Various sensors 30 transmit the detection signal to AI speaker 20 by near field communication such as ZigBee (registered trademark), Bluetooth (registered trademark), or wireless LAN.

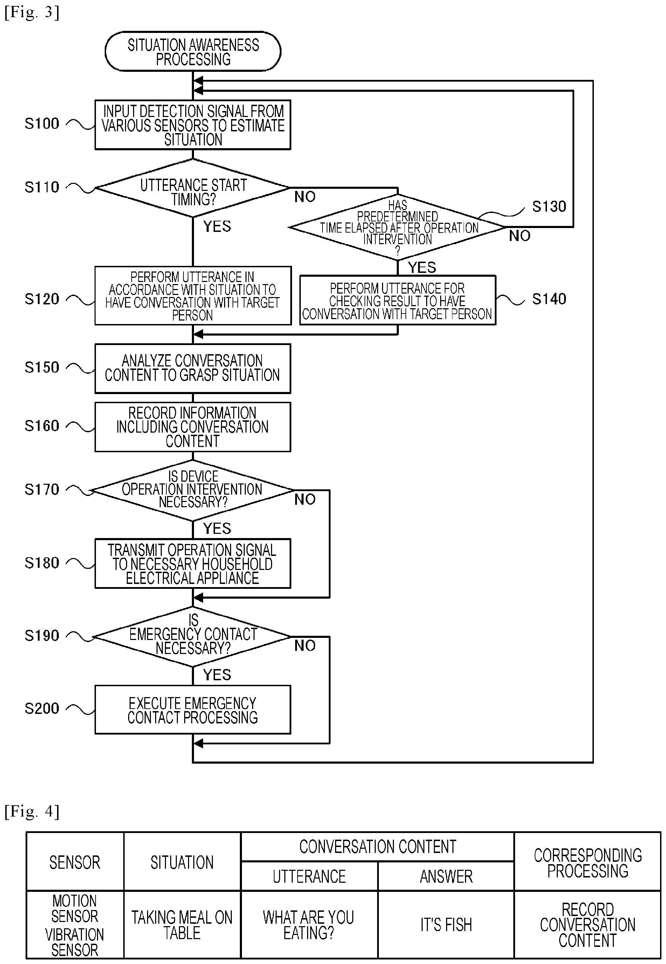

Hereinafter, an operation of situation awareness system 10 will be described. Fig. 3 is a flowchart illustrating an example of situation awareness processing. This processing is executed by CPU 24a of control section 24 of AI speaker 20.

In the situation awareness processing, CPU 24a of control section 24 first inputs the detection signals from various sensors 30, estimates the situation of target person T or the environment in the room (S100), and determines whether an utterance start timing has arrived (S110).

In S100, for example, CPU 24a estimates, based on the detection signal of opening/closing sensor 33, that a situation is a situation in which target person T has opened and closed interior door 4c to enter (or leave) the room. CPU 24a estimates that a situation is a situation in which target person T is preparing for a meal by opening and closing the door of refrigerator 2d or the door of microwave oven 2e, based on the detection signals of opening/closing sensors 31 and 32. CPU 24a estimates that a situation is a situation in which target person T is sitting on chair 4b and taking a meal on table 4a (starts taking a meal), based on the detection signals of motion sensor 34 and vibration sensor 35. Further, based on the detection signal from temperature sensor 36, it is estimated that the room is in a cold situation or a hot situation. In S110, for example, CPU 24a determines that the utterance start timing has arrived when it is estimated in S100 that a situation is a situation in which a meal is prepared for or a situation in which a meal is taken, or determines that the utterance start timing has arrived when it is estimated that the room is in a cold situation or a hot situation.

When CPU 24a determines that the utterance start timing has arrived in S110, CPU 24a performs the utterance in accordance with the situation to have a conversation with target person T (S120). On the other hand, when CPU 24a determines that the utterance start timing has not arrived in S110, CPU 24a performs the processing of S130 or S140, but this case will be described later.

When CPU 24a has a conversation with target person T in S120, CPU 24a analyzes the conversation content to grasp the situation of target person T or the environment in the room (S150), and records information including the conversation content or date and time information (S160). That is, CPU 24a stores the information including the conversation content or the date and time information in storage section 26. CPU 24a determines whether the intervention to the operation of household electrical appliance 2 is necessary based on the situation grasped in S150 (S170), and when it is determined that the operation intervention is necessary, CPU 24a transmits the operation signal to necessary household electrical appliance 2 (S180). On the other hand, when it is determined in S 170 that the operation intervention is not necessary, CPU 24a skips S180.

Next, CPU 24a determines whether an emergency contact is necessary based on the situation grasped in S150 (S190), and when it is determined that the emergency contact is necessary, executes emergency contact processing (S200), and returns to S100. In S200, for example, a mail for emergency contact is transmitted to portable terminal P of administrator S or a push notification is performed. On the other hand, when it is determined in S200 that the emergency contact is not necessary, CPU 24a skips S200 and returns to S100.

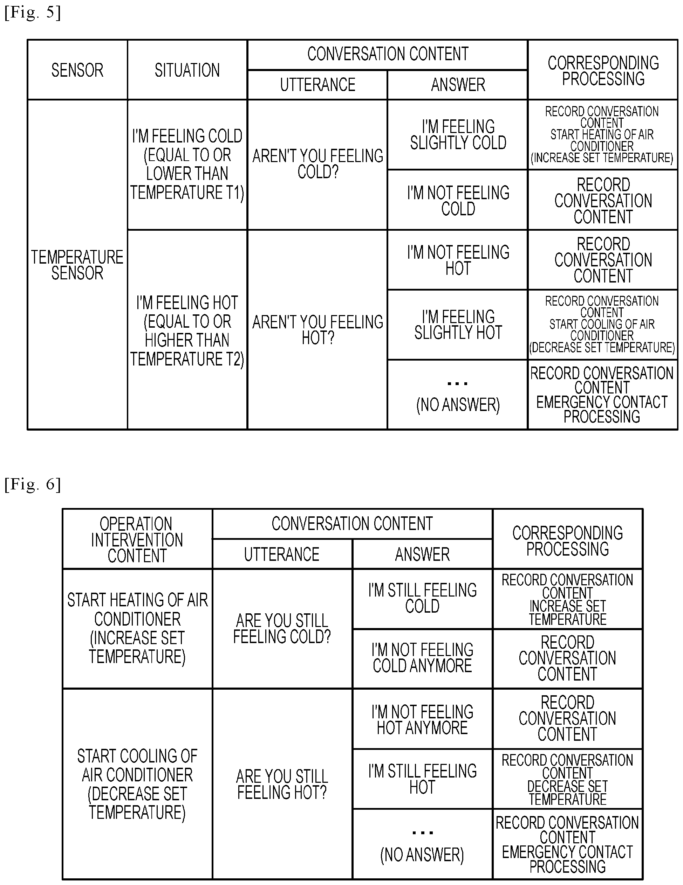

Figs. 4 and 5 are explanatory diagrams illustrating examples of the situation, the conversation content, and the corresponding processing. As illustrated in Fig. 4, when it is estimated that target person T is taking a meal on table 4a based on the detection signal from motion sensor 34 or vibration sensor 35, AI speaker 20 (CPU 24a) performs an utterance, such as "What are you eating?", from speaker 22. Then, for example, when there is an answer of "It's a fish" from target person T, CPU 24a grasps a situation in which target person T is taking a meal and that target person T eats a fish, and records the information including the conversation content or the date and time information.

Further, as illustrated in Fig. 5, when it is estimated that the temperature in the room is in a cold situation in which the temperature in the room is equal to or lower than first predetermined temperature T1 based on the detection signal from temperature sensor 36, AI speaker 20 (CPU 24a) performs an utterance, such as "Aren't you feeling cold?", from speaker 22. Then, for example, when there is an answer, such as "I'm feeling slightly cold", from target person T, CPU 24a grasps a situation in which target person T is feeling cold, and records the information including the conversation content or the date and time information. CPU 24a determines that the intervention to the operation of air conditioner 2a is necessary, transmits the operation signal for starting a heating operation of air conditioner 2a or increasing a set temperature, and determines that the emergency contact is unnecessary. When there is an answer of "I'm not feeling cold" from target person T, CPU 24a grasps a situation in which target person T is not feeling cold, and records the information including the conversation content or the date and time information. In this case, CPU 24a determines that both the intervention to the operation of household electrical appliance 2 and the emergency contact are unnecessary.

On the other hand, when it is estimated that the temperature in the room is in a hot situation in which the temperature in the room is equal to or higher than second predetermined temperature T2, which is higher than first predetermined temperature T1, based on the detection signal from temperature sensor 36, AI speaker 20 (CPU 24a) performs an utterance, such as "Aren't you feeling hot?", from speaker 22. Then, for example, when there is an answer, such as "I'm not feeling hot", from target person T, CPU 24a grasps a situation in which target person T is not feeling hot, and records the information including the conversation content or the date and time information. In this case, CPU 24a determines that both the intervention to the operation of household electrical appliance 2 and the emergency contact are unnecessary. Then, for example, when there is an answer, such as "I'm feeling slightly hot", from target person T, CPU 24a grasps a situation in which target person T is feeling hot, and records the information including the conversation content or the date and time information. CPU 24a determines that the intervention to the operation of air conditioner 2a is necessary, transmits the operation signal for starting a cooling operation of air conditioner 2a or decreasing a set temperature, and determines that the emergency contact is unnecessary. Furthermore, when there is no answer from target person T, CPU 24a grasps a situation in which there is a possibility of abnormality such as unawareness of target person T due to heat stroke or the like, records the information including the conversation content (utterance only) and the date and time information, determines that emergency contact is necessary, and executes the emergency contact processing. Also in this case, CPU 24a may start the cooling operation of air conditioner 2a or decrease the set temperature. Further, CPU 24a may execute the emergency contact processing in a case where there is no answer even when the utterance is repeated a predetermined number of times regardless of the situation.

In a case where CPU 24a returns to S 100 after performing the intervention to the operation of household electrical appliance 2 in S 170 and S 180 of the situation awareness processing of Fig. 3, when CPU 24a determines that the utterance start timing has not arrived in S110, CPU 24a determines whether a predetermined time has elapsed after the operation intervention (S130). When it is determined that the predetermined time has not elapsed, CPU 24a returns to S100. On the other hand, when CPU 24a determines that the predetermined time has elapsed, CPU 24a performs an utterance in order to check a change in the situation due to the result of the operation intervention to have a conversation with target person T (S140), and proceeds to S150.

Fig. 6 is an explanatory diagram illustrating an example of an operation intervention content, a conversation content, and corresponding processing. In Fig. 6, the conversation content and the corresponding processing after the intervention to the operation of air conditioner 2a is illustrated. As illustrated, when the heating operation of air conditioner 2a is started or the set temperature is increased in the operation intervention, AI speaker 20 (CPU 24a) performs an utterance, such as "Are you still feeling cold?", from speaker 22 after a predetermined time elapses. Then, for example, when there is an answer, such as "I'm still feeling cold", from target person T, CPU 24a grasps a situation in which target person T is still feeling cold, and records the information including the conversation content or the date and time information. In addition, CPU 24a determines that the intervention to the operation of air conditioner 2a again is necessary, transmits the operation signal for further increasing the set temperature of air conditioner 2a, and determines that the emergency contact is unnecessary. When there is an answer of "I'm not feeling cold anymore" from target person T, CPU 24a grasps that a situation is changed to a situation in which target person T is not feeling cold, and records the information including the conversation content or the date and time information. In this case, CPU 24a determines that both the intervention to the operation of air conditioner 2a and the emergency contact again are unnecessary.

On the other hand, when the cooling operation of air conditioner 2a is started or the set temperature is decreased in the operation intervention, AI speaker 20 (CPU 24a) performs an utterance, such as "Are you still feeling hot?", from speaker 22 after the predetermined time elapses. Then, when there is an answer of "I'm not feeling hot anymore" from target person T, CPU 24a grasps that a situation is changed to a situation in which target person T is not feeling hot, and records the information including the conversation content or the date and time information. In this case, CPU 24a determines that both the intervention to the operation of air conditioner 2a and the emergency contact again are unnecessary. Then, for example, when there is an answer, such as "I'm still feeling hot", from target person T, CPU 24a grasps a situation in which target person T is still feeling hot, and records the information including the conversation content or the date and time information. In addition, CPU 24a determines that the intervention to the operation of air conditioner 2a again is necessary, transmits the operation signal for further decreasing the set temperature of air conditioner 2a, and determines that the emergency contact is unnecessary. Furthermore, when there is no answer from target person T, CPU 24a grasps a situation in which there is a possibility of abnormality, records the information including the conversation content or the date and time information, determines that emergency contact is necessary, and executes the emergency contact processing. Also in this case, CPU 24a may further decrease the set temperature of air conditioner 2a.

Here, a correspondence relationship between the elements of the present embodiment and the elements of the present disclosure will be clarified. Sensors 30 (opening/closing sensors 31, 32, and 33, motion sensor 34, vibration sensor 35, and temperature sensor 36) of the present embodiment correspond to a detection sensor, AI speaker 20 corresponds to a voice response device, and storage section 26 corresponds to a storage section. In addition, in the present embodiment, an example of the situation awareness method of the present disclosure is clarified by describing the operation of situation awareness system 10.

As described above, in situation awareness system 10, since AI speaker 20 performs the utterance to target person T with the content in accordance with the result of the detection by sensors 30, and records the information including the conversation content with target person T accompanying the utterance in storage section 26, it is possible to grasp the situation of target person T without monitoring target person T with the camera or the like.

In addition, since AI speaker 20 grasps the situation of target person T from the conversation content and performs the corresponding processing such as the operation intervention processing of household electrical appliance 2 or the emergency contact processing in accordance with the grasped situation, it is possible to take appropriate measures in accordance with the grasped situation.

In addition, AI speaker 20 transmits the operation signal in accordance with the situation to household electrical appliance 2 to operate household electrical appliance 2, so that a situation comfortable for target person T can be provided.

Further, since AI speaker 20 performs the utterance to target person T in order to check the change in the situation due to the operation of household electrical appliance 2 based on the transmitted operation signal, it is possible to provide a situation more comfortable for the target person while checking the change in the situation, with respect to target person T.

It is needless to say that the present disclosure is not limited in any way to the embodiment described above, and the present disclosure can be embodied in various aspects as long as the aspects fall within the technical scope of the present disclosure.

In the embodiment described above, situation awareness system 10 includes multiple sensors as sensors 30, but the configuration is not limited thereto. Situation awareness system 10 need only include one or more of motion sensor 34 that detects target person T, opening/closing sensors 31, 32, and 33 that detect a state that changes due to an opening/closing operation or a dietary operation of target person T, vibration sensor 35, or temperature sensor 36 that detects the state inside residence 1. In addition, the detection method of each sensor is merely an example, and is not limited to the method of the embodiment, and other methods of sensors may be used. For example, a series of movements (movement line) of target person T may be detected using a sensor such as a millimeter wave radar, and a situation in which a meal is prepared for may be grasped.

In the embodiment, the situation of target person T or the environment in the room is estimated based on the detection signals from various sensors 30, and then the utterance is started, but the configuration is not limited thereto. For example, the situation of target person T or the environment in the room may be estimated based on the detection signals from various sensors 30 and then the time information (date and time information), and the utterance may be started. That is, when control section 24 of AI speaker 20 determines that there is a possibility that target person T is taking a meal based on the detection signals from various sensors 30 and that the current time is included in the time slot in which the meal is taken, control section 24 of AI speaker 20 need only start the utterance related to the meal. On the other hand, even in a case where there is a possibility that target person T is taking a meal from the detection signal, when the current time is not included in the time slot in which a meal is taken, control section 24 of AI speaker 20 need only avoid starting the utterance related to the meal. Further, control section 24 of AI speaker 20 may use a predetermined time slot as a time slot in which a meal is taken, or may use a time slot determined based on a learning result of a time at which target person T takes a meal. Control section 24 may learn the season or the day of the week in association with the time slot in which a meal is taken.

In the embodiment, AI speaker 20 includes storage section 26, but the configuration is not limited thereto. Situation awareness system 10 may include a storage section separately from AI speaker 20, or a server or the like on a network in a place different from residence 1 may be used as the storage section. In the embodiment, the form of the situation awareness system 10 including AI speaker 20 and sensors 30 is employed, but the configuration is not limited to this, and a form of AI speaker 20 including one or more sensors 30 may be employed.

In the embodiment, AI speaker 20 is illustrated as the voice response device, but the configuration is not limited thereto. The voice response device need only be provided with microphone 21 for inputting and recognizing the voice of target person T and speaker 22 for outputting the voice to automatically perform the voice response, and may be a smartphone, a tablet, or the like.

In the embodiment, the operation signal to air conditioner 2a is illustrated as the operation signal to household electrical appliance 2, but the configuration is not limited to this. For example, in a case where a situation in which target person T sits on chair 4b is grasped, an utterance whether target person T wants to watch television 2c may be performed and television 2c may be turned on based on the answer, or an utterance whether to turn on the light may be performed based on the current time, and lighting 2b may be turned on based on the answer. In addition, after television 2c is turned on, an utterance may be performed in order to select a received program or check whether the volume is appropriate. Alternatively, an utterance for checking the change in the situation need not be performed after the operation signal is transmitted to household electrical appliance 2. In this case, S130 and S140 of the situation awareness processing of Fig. 3 need only be omitted.

In the embodiment, the operation intervention processing of household electrical appliance 2 and the emergency contact processing are performed as the corresponding processing in accordance with the situation grasped from the conversation content, but the configuration is not limited thereto, and only one of the operation intervention processing of household electrical appliance 2 and the emergency contact processing may be performed. In this case, in the situation awareness processing of Fig. 3, S170 and S180 may be omitted, or S190 and S200 need only be omitted. Alternatively, the configuration is not limited to performing such corresponding processing, and S170 to S200 may be omitted by not performing the corresponding processing. That is, situation awareness system 10 need only grasp the situation from the conversation content with target person T and record the information including the conversation content.

Here, the situation awareness system of the present disclosure is capable of appropriately taking measures in accordance with the grasped situation. In addition, the situation awareness system of the present disclosure can provide a situation more comfortable for the target person by operating the device in accordance with the situation. In addition, the situation awareness system of the present disclosure can provide a situation more comfortable for the target person while checking the change in the situation with the target person.

Similar to the situation awareness system described above, the voice response device of the present disclosure can grasp the situation of the target person without monitoring the target person with the camera or the like. In the voice response device, various aspects of the situation awareness system described above may be employed, or a configuration for achieving each function of the situation awareness system may be added.

Similar to the situation awareness system described above, the situation awareness method of the present disclosure can grasp the situation of the target person without monitoring the target person with the camera or the like. In this situation awareness method, various aspects of the situation awareness system described above may be employed, or a step of achieving each function of the situation awareness system may be added.

### Industrial Applicability

The present disclosure can be used in a technical field in which the situation of the target person who is watched over or monitored is grasped.

### Reference Signs List

1: residence, 2: household electrical appliance, 2a: air conditioner, 2b: lighting, 2c: television, 2d: refrigerator, 2e: microwave oven, 4: furniture/fixture, 4a: table, 4b: chair, 4c: interior door, 8: Internet, 10: situation awareness system, 20: AI speaker, 21: microphone, 22: speaker, 24: control section, 24a: CPU, 24b: ROM, 24c: RAM, 26: storage section, 28: communication section, 30: sensor, 31, 32, 33: opening/closing sensor, 34: motion sensor, 35: vibration sensor, 36: temperature sensor, P: portable terminal, S: administrator, T: target person

## Claims

1. A situation awareness system for grasping a situation of a target person in a residence, the situation awareness system comprising:
one or more detection sensors configured to perform at least any one of detecting the target person, detecting a state of an installation object which is installed in the residence and of which the state is changeable due to an operation of the target person, and detecting a state of an environment in the residence;
a voice response device configured to perform a voice response including an utterance to the target person; and
a storage section configured to store information,
wherein the voice response device is configured to perform an utterance to the target person with a content in accordance with a result of the detection by the detection sensor, and store information including a conversation content with the target person accompanying the utterance in the storage section.

2. The situation awareness system according to Claim 1,
wherein the voice response device is configured to grasp the situation of the target person from the conversation content, and perform corresponding processing in accordance with the grasped situation.

3. The situation awareness system according to Claim 2,
wherein the voice response device is configured to transmit an operation signal to a device installed in the residence, and transmit the operation signal giving an instruction for an operation in accordance with the situation to the device, as the corresponding processing.

4. The situation awareness system according to Claim 3,
wherein the voice response device is configured to perform the utterance to the target person in order to check a change in the situation by the operation of the device based on the operation signal, after transmitting the operation signal.

5. A voice response device configured to perform a voice response including an utterance to a target person in a residence, the voice response device comprising:
one or more detection sensors configured to perform at least any one of detecting of the target person, detecting a state of an installation object which is installed in the residence and of which the state is changeable due to an operation of the target person, and detecting a state of an environment in the residence; and
a storage section configured to store information,
wherein the voice response device is configured to perform an utterance to the target person with a content in accordance with a result of the detection by the detection sensor, and store information including a conversation content with the target person accompanying the utterance in the storage section.

6. A situation awareness method of grasping a situation of a target person in a residence by a voice response device, the situation awareness method comprising:
a step (a) of performing at least any one of detecting the target person, detecting a state of an installation object which is installed in the residence and of which the state is changeable due to an operation of the target person, and detecting a state of an environment in the residence; and
a step (b) of performing an utterance to the target person with a content in accordance with a result of the detection in the step (a), and storing information including a conversation content with the target person accompanying the utterance in a storage section.
